Europäisches Patentamt

(19) European Patent Office

Office européen des brevets

(11) Numéro de publication : **0 027 484**
**B1**

(12) FASCICULE DE BREVET EUROPÉEN

(45) Date de publication du fascicule du brevet :
15.08.84

(51) Int. Cl.³ : **C 01 B 25/225**

(21) Numéro de dépôt : 79401027.2

(22) Date de dépôt : 17.12.79

(54) **Dispositif pour améliorer la production d'acide phosphorique par voie humide.**

(30) Priorité : 17.10.79 TN 1208979

(43) Date de publication de la demande :
29.04.81 Bulletin 81/17

(45) Mention de la délivrance du brevet :
15.08.84 Bulletin 84/33

(84) Etats contractants désignés :
BE CH DE FR GB IT NL

(56) Documents cités :
FR-A- 1 122 463
FR-A- 1 343 324
FR-A- 1 592 005
CHEMICAL ABSTRACTS, vol. 91, no. 22, 26 novembre
1979, page 117, colonne de gauche réf. no. 177415u
Columbus, Ohio, US

(73) Titulaire : **SOCIETE INDUSTRIELLE D'ACIDE PHOS-
PHORIQUE ET D'ENGRAIS S.I.A.P.E.**
**1, rue Larbi**
**Zarrouk Sfax (TN)**

(72) Inventeur : **M'Gaieth, Mohamed**
**El Menzah 324**
**Tunis (TN)**
Inventeur : **Benmansour, Abderrazak**
**Cité Standaert**
**Sfax (TN)**

(74) Mandataire : **Harlé, Robert et al**
**c/o Cabinet Harlé & Phélip 21, rue de la Rochefoucauld**
**F-75009 Paris (FR)**

## Description

La présente invention concerne la production d'acide phosphorique par voie humide.

Elle concerne plus particulièrement l'augmentation de la capacité nominale de production d'un réacteur pour la production d'acide phosphorique par voie humide à partir de phosphates naturels et d'acide sulfurique concentré ou dilué.

Il est classique de produire de l'acide phosphorique en attaquant des phosphates naturels en phase liquide aqueuse par de l'acide sulfurique et en filtrant le mélange obtenu d'acide phosphorique et de sulfate de calcium précipité.

Dans les procédés et les installations mis en œuvre sur ce principe, la difficulté réside dans la nécessité d'obtenir des cristaux de sulfate de chaux dont les dimensions et la forme soient telles qu'ils puissent être facilement séparés par filtration. On sait que les cristaux de gypse, ou dihydrate $CaSO_4$, $2 H_2O$, sont ceux qui se prêtent le mieux à la filtration et au lavage. On essaie donc en général de maintenir dans les cuves de réaction une température et une concentration en $P_2O_5$ suffisamment basses pour obtenir avec certitude une précipitation de dihydrate. Il est d'autre part admis que la précipitation de sulfate de chaux est d'autant plus régulière et donne des cristaux d'autant plus facilement filtrables que la dispersion de l'acide sulfurique dans la bouillie en réaction est plus rapide. Aussi opère-t-on en général le mélange de la bouillie phosphorique et de l'acide sulfurique en agitant aussi violemment que possible.

On a ainsi décrit dans le brevet FR 1.122.463 un procédé de production d'acide phosphorique consistant fondamentalement à mettre en présence de l'acide sulfurique et une bouillie de phosphate étendu d'eau, de préférence d'eau chargée elle-même d'acide phosphorique et provenant du lavage du sulfate de chaux obtenu lors d'une opération précédente, en des quantités respectives calculées pour maintenir la teneur désirée en $P_2O_5$ dans le mélange réactionnel, dans une enceinte à couvercle sensiblement étanche, de volume relativement très grand par rapport à la quantité de mélange de bouillie de phosphate et d'acide phosphorique traitée à chaque instant, et à brasser le mélange réactionnel de façon suffisamment énergique pour déterminer sa projection sous forme de gouttelettes dans l'atmosphère surmontant le mélange dans l'enceinte, tout en renouvelant de façon continue cette atmosphère par circulation d'un courant d'air dont le débit est d'autant plus grand que la température désirée pour la réaction est plus basse ; l'introduction et l'évacuation du mélange réactionnel respectivement dans et hors de l'enceinte réactionnelle sont opérées de préférence de façon continue, avec un débit prédéterminé pour assurer une réaction aussi complète que possible dans l'enceinte.

L'enceinte précédente peut être connectée à une cuve additionnelle munie d'un agitateur rotatif dans laquelle la réaction est parachevée, et la bouillie sortant de cette enceinte peut être recyclée dans la cuve de réaction.

Le dispositif pour la mise en œuvre de ce procédé comporte en particulier une cuve qui, en plus des moyens d'introduction et d'évacuation des réactifs, comprend un agitateur constitué par un disque muni de palettes périphériques et déterminant la projection de la bouillie sous forme de gouttelettes, ainsi que des conduites respectivement d'arrivée et d'évacuation d'air, débouchant au voisinage de la partie supérieure de la cuve.

On a également proposé dans le brevet FR 1.592.005 un réacteur permettant de produire de l'acide phosphorique par cette même voie et apte à répondre aux besoins d'une production en continu et sur une grande échelle d'acide phosphorique, par ce procédé de voie humide.

Ce réacteur comprend fondamentalement :

(1) une première cuve cylindrique ;

(2) une deuxième cuve cylindrique, située à l'intérieur de la première cuve et dont l'axe est parallèle à celui de celle-ci et dans une position excentrée, ce qui délimite dans le réacteur une première zone, annulaire, située entre la première et la deuxième cuve et ayant une section en forme de croissant, et

(3) deux parois radiales de séparation s'étendant entre la première et la deuxième cuve, dans la partie de la zone en forme de croissant où la distance entre la première et la deuxième cuve est voisine du minimum, ce qui délimite dans le réacteur une troisième zone comprise entre ces parois et la périphérie de chaque cuve.

Le volume total du réacteur est fonction du tonnage journalier prévu. Dans la zone en forme de croissant, se trouvent plusieurs agitateurs à double turbine dont l'une est immergée vers le fond et l'autre semi-immergée, ainsi que des moyens permettant d'assurer un balayage d'air frais pour refroidir la bouillie. La deuxième cuve est munie d'un rotor comme moyen d'agitation. Il existe encore des moyens appropriés de circulation de la bouillie entre les différentes zones.

Un tel réacteur permet de satisfaire simultanément aux trois objectifs ci-après :

— obtention d'un mélange intime des constituants, et ce dans une courte période de temps,

— évacuation efficace de la chaleur de réaction, ce qui permet de contrôler la température du milieu réactionnel et,

— réalisation d'une circulation intense du milieu réactionnel, ce qui permet une dispersion rapide des phases liquides tendant à se saturer au contact des produits frais introduits.

Dans le brevet FR-A-1 343 324 est décrit un procédé de production d'acide phosphorique par voie humide, consistant à refroidir une partie du coulis réactionnel soutirée du digesteur sous forme dispersée dans un courant d'air et pour cela diriger le coulis sur la surface interne d'un passage convergent vers le bas, en même temps qu'un courant d'air accéléré est envoyé vers le bas, le coulis étant projeté transversalement à l'intérieur de ce courant d'air à l'extrémité inférieure dudit passage, cette opération pouvant être réalisée dans un récipient fermé. Un tel procédé ne permet pas d'obtenir simultanément le refroidissement de la bouillie y circulant et le grossissement des cristaux dans la bouillie. Enfin, dans le brevet SU-A-682 477, tel que résumé dans Chem. Abstract 91, 177 415 u, on préconise de refroidir la pulpe par de l'air avant de la recycler avec l'acide phosphorique.

On a maintenant trouvé de façon inattendue qu'on peut réaliser une augmentation substantielle de la capacité nominale de production d'un réacteur d'acide phosphorique par voie humide, avec tout réacteur fonctionnant selon ce procédé et plus particulièrement avec ceux qui sont décrits dans les deux brevets FR-A 1122 463 et FR-A 1592 005, en mettant en œuvre une cuve additionnelle fermée, dans laquelle on introduit en continu et on brasse, sous balayage d'air, le mélange réactionnel issu du réacteur classique et on lui communique un gradient négatif de température de 8 ± 2 °C, avant de le réintroduire dans la cuve de production du réacteur classique.

La présente invention a donc pour objet un dispositif à connecter avec un réacteur préexistant et assurant une augmentation substantielle de la capacité nominale de production de ce réacteur produisant de l'acide phosphorique par voie humide à partir de phosphates naturels et d'acide sulfurique, ledit dispositif comprenant un récipient séparé du réacteur et pouvant être fermé dans lequel le mélange réactionnel est agité et refroidi, des moyens de liaison entre ce récipient et le réacteur pour soutirer le mélange réactionnel du réacteur et ramener le mélange réactionnel refroidi dans ce récipient et des moyens pour faire circuler de l'air de refroidissement dans ledit récipient, ledit dispositif étant caractérisé en ce que ledit récipient est une cuve fermée, de volume inférieur à celui du réacteur, la somme du volume du réacteur et de la cuve en m$^3$ par rapport à la production journalière effective d'acide phosphorique, exprimée en tonnes de $P_2O_5$ par jour, étant dans un rapport allant de 1,5 à 1,7, les moyens de liaisons entre la cuve et le réacteur étant tels que les produits en réaction préalablement mélangés dans le réacteur sont introduits dans la cuve par débordement du réacteur ainsi que par une tuyauterie reliant le fond du réacteur à ladite cuve ce qui assure des niveaux de produit sensiblement égaux dans la cuve et le réacteur, et le mélange réactionnel circulant dans la cuve étant refroidi dans celle-ci de telle sorte qu'il soit réintroduit dans le réacteur à une température inférieure de 8 ± 2 °C à celle du mélange dans le réacteur.

On notera que le dispositif selon l'invention n'est manifestement pas équivalent aux cuves tampon ou cuves de passage comme il en existe dans des installations classiques de ce genre, puisqu'il permet de réaliser le grossissement des cristaux, ce que les dispositifs antérieurement connus ne permettent pas de réaliser de façon parfaite.

Il est connu qu'un abaissement de la température stabilise et grossit les cristaux de dihydrate ; toutefois dans les installations existantes la température minimale est limitée à la sortie de la cuve principale à 75 °C, à cause de la viscosité croissante de la bouillie. L'invention repose par contre sur la mise au point d'un moyen de traiter une portion de la bouillie qui puisse être réintroduite dans la cuve principale, de façon à y former des germes de dihydrate suffisamment gros et stables pour qu'ils soient aisément filtrables. On a trouvé que ce moyen doit créer un gradient tel que susdit.

Le brassage dans la cuve additionnelle peut être effectué par tout moyen connu de l'homme de l'art, et en particulier au moyen d'au moins un agitateur à double turbine dont l'une des turbines est immergée, tandis que l'autre est semi-immergée ; avec ce type préféré d'agitateur, la turbine semi-immergée permet d'éclabousser le mélange, qui est sous forme d'une bouillie, à la surface, et de réaliser ainsi un contact intime entre l'air balayant la partie supérieure de ladite cuve et cette bouillie pour enlever à celle-ci le maximum de calories ; de plus, cette turbine semi-immergée permet de réaliser une désémulsification de cette bouillie, en favorisant le dégagement du gaz carbonique résiduel contenu dans la bouillie.

Pour assurer le balayage d'air dans la partie supérieure de la cuve additionnelle, il convient par exemple d'équiper cette partie supérieure de cuve d'un ventilateur aspirant l'air à travers elle. Ce balayage d'air doit être approprié, en combinaison avec les autres paramètres, pour permettre l'évacuation des calories dues à l'augmentation de production réalisée dans cette cuve. L'air frais est amené dans la cuve dans la partie supérieure de celle-ci par une ouverture pratiquée dans le toit de la cuve, de préférence en un point du toit opposé à celui par lequel se fait l'aspiration du ventilateur, et cela afin d'optimiser l'échange entre la surface de la bouillie et l'air.

Pour améliorer encore l'efficacité du refroidissement ainsi réalisé, on fait en sorte, en pratique, que l'espace compris entre le niveau du liquide dans la cuve additionnelle et le couvercle de celle-ci soit continuellement maintenu dans des limites très restreintes, en service.

On préfère que le couvercle obture d'une façon sensiblement étanche la cuve additionnelle pour que la vitesse de l'air entrant dans celle-ci soit maximale, pour une vitesse donnée du ventilateur.

La bouillie, une fois brassée et refroidie comme il convient de 8 ± 2 °C dans la cuve additionnelle, est aspirée, au moyen d'un dispositif aspirant-refoulant approprié, comme par exemple une pompe horizontale centrifuge, dont le débit est lui aussi fonction de l'augmentation de production et de la diminution de la température de la bouillie recherchée ; elle est refoulée à travers une tuyauterie appropriée dans le compartiment de réaction du réacteur principal, qui est le compartiment où sont introduits l'acide sulfurique et le phosphate.

Le dispositif aspirant-refoulant prélève avantageusement la bouillie au fond ou à proximité du fond de la cuve additionnelle, c'est-à-dire en un point où la densité de la bouillie est la plus grande.

En fonctionnement continu, les calories évacuées de la cuve additionnelle doivent pratiquement correspondre aux calories dues à l'accroissement de production.

La cuve additionnelle elle-même peut être cylindrique, elliptique, ovale ou cubique. On préfère cependant une cuve horizontale de section longitudinale ovale ou elliptique. Cette cuve est avantageusement munie de deux ou plus de deux agitateurs doubles fonctionnant comme décrit plus haut.

Elle peut être constituée, en pratique, d'une enveloppe en acier, revêtue de caoutchouc ou d'un latex projeté, à raison d'une épaisseur de 3 à 4 mm, et garnie de briques au carbone à 8 % sur les parois, et de briques silicoalumineuses et de briques au carbone pour le fond de cuve, tandis que son toit ou couvercle peut être en acier revêtu par du caoutchouc ou un latex projeté.

En ce qui concerne les avantages procurés par le procédé selon l'invention, il convient de noter tout d'abord qu'en général, toute tentative d'augmentation de la capacité de production dans le domaine de la fabrication d'acide phosphorique s'est soldée par une détérioration de certains éléments caractéristiques de cette fabrication, à savoir, en particulier :

— la concentration en anhydride phosphorique ($P_2O_5$) de l'acide phosphorique produit ;

— le rendement optimal de l'extraction du $P_2O_5$ de la roche phosphatée ;

— les dimensions et formes des cristaux de dihydrate, qui conditionnent la séparation ultérieure par filtration sous vide des constituants du mélange de sulfate de calcium ($CaSO_4$, $2 H_2O$) et d'acide phosphorique.

Or, on a trouvé que, de façon inattendue, le dispositif selon l'invention permet, avec tout système classique de production d'acide phosphorique de voie humide, auquel il est couplé :

— d'augmenter la capacité nominale de production du réacteur principal ;

— de maintenir le rendement d'extraction du $P_2O_5$ de la roche (phosphate naturel) et le titre en $P_2O_5$ de l'acide produit ;

— d'obtenir des cristaux de sulfate de calcium ($CaSO_4$, $2 H_2O$) d'une qualité au moins équivalente à celle des cristaux formés dans le réacteur principal fonctionnant au nominal.

Ce dispositif est en outre compatible avec les installations existantes et ne nécessite pas leur transformation, hormis l'interconnexion nécessaire.

On a d'autre part trouvé que, grâce à la mise en œuvre du gradient de température susdit, il permet de contrôler la réaction chimique et, favorisant la formation de cristaux plus gros, d'éviter la formation partielle de cristaux d'hémihydrate, dont l'apparition est inévitable dans le procédé classique et dégrade la filtrabilité sous vide du gypse qui se trouve dans une phase métastable.

L'insertion de ce dispositif dans une installation classique de production d'acide phosphorique par voie humide permet de traiter les phosphates de chaux naturels à bas titre, jusqu'à des teneurs de 60 % environ en B.P.L., et atténue l'influence des impuretés qui sont présentes en grandes proportions dans ce cas.

L'invention est illustrée plus en détail, dans ce qui suit, en référence à la planche de dessins annexée, dans laquelle :

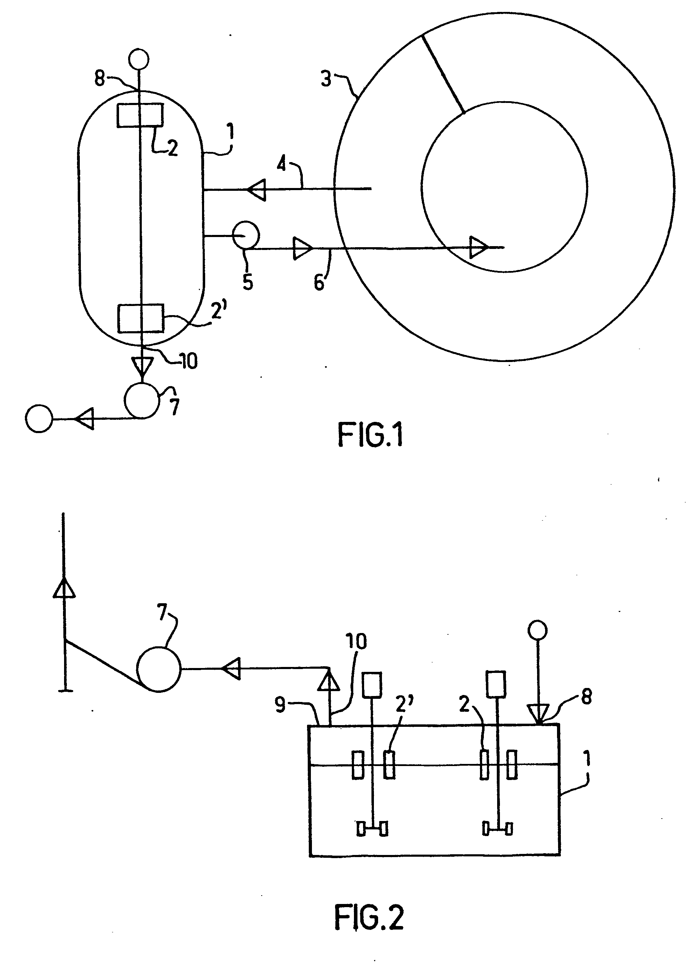

Figure 1 représente une vue de dessus schématique du dispositif selon l'invention associé à un réacteur à deux cuves classique.

Figure 2 représente, en vue de côté schématique, uniquement la cuve additionnelle, ainsi que ses équipements et autres raccordements liés au balayage par de l'air.

Pour la commodité de la description, on ne sépare pas les caractéristiques de structure des divers organes des fonctions que ceux-ci remplissent, ce qui permet de préciser le rôle des moyens de l'invention en même temps qu'on les définit.

Le dispositif schématisé aux dessins annexés, et qui n'est, rappelons-le, qu'un exemple illustratif du dispositif selon l'invention, comprend une cuve 1 de section sensiblement ovale à deux agitateurs 2, 2′, qui permettent de profiter au maximum de la puissance d'agitation absorbée et d'éviter les zones mortes qui entraîneraient des décantations néfastes.

Le volume de cette cuve doit être déterminé par rapport à l'augmentation de production recherchée, en fonction de la règle donnée plus haut.

La cuve 1 est alimentée par débordement du réacteur principal 3 et, par le fond, par une tuyauterie 4, de façon qu'il s'y maintienne, par un système de vases communicants, des niveaux sensiblement égaux dans les enceintes 1 et 3.

Une pompe horizontale centrifuge 5, dont le débit est fonction de l'augmentation de production et du gradient de température qu'on se fixe, aspire la bouillie de la cuve additionnelle 1 et la refoule, par l'intermédiaire de la tuyauterie 6, dans le compartiment de réaction du réacteur 3, où sont introduits le phosphate et l'acide sulfurique.

Les agitateurs 2 et 2′ disposés dans la cuve 1 sont du type à double turbine, l'une des turbines étant immergée, tandis que l'autre est semi-immergée. Cette dernière permet avantageusement d'éclabousser la bouillie à la surface, favorisant ainsi un contact intime entre l'air de balayage de la partie supérieure de la cuve additionnelle et la bouillie, ce qui permet d'extraire le maximum de calories de celle-ci. Elle permet aussi d'effectuer une désémulsification de la bouillie (encore dénommée « pulpe ») provenant du réacteur principal, avec dégagement du gaz carbonique résiduel de la bouillie

Un ventilateur 7 assure une aspiration à travers la partie supérieure de la cuve 1 et permet, par le balayage d'air de cette partie supérieure qu'il réalise, l'évacuation des calories qui proviennent de l'augmentation de production. L'air frais entre dans la cuve 1 dans la partie supérieure de celle-ci, par une ouverture 8 ménagée dans son toit (ou couvercle) 9 et judicieusement pratiquée à l'opposé de l'aspiration 10 du ventilateur, de telle façon que l'échange entre la surface de la bouillie et l'air soit optimisé.

En service, on maintient l'espace compris entre le niveau du liquide et le couvercle de la cuve 1 dans des limites très restreintes, afin d'obtenir un maximum d'efficacité du système de refroidissement, tandis que le couvercle 9 obture de façon sensiblement étanche la cuve 1.

Une pompe horizontale centrifuge 5 aspire la bouillie du fond de la cuve 1 et la refoule, par l'intermédiaire de la tuyauterie 6, dans le compartiment de réaction du réacteur principal 3, où sont introduits le phosphate et l'acide sulfurique.

Le dispositif ainsi réalisé est piloté de telle manière que les calories évacuées de la cuve additionnelle correspondent pratiquement aux calories dues à l'accroissement de production obtenu.

A titre d'exemple, on a mis en œuvre, dans les usines de la demanderesse où fonctionnait un réacteur classique pour la production d'acide phosphorique de voie humide d'un volume utile de 450 m³ et ayant une capacité nominale de 300 tonnes de $P_2O_5$ par jour, une cuve additionnelle telle que décrite ci-dessus, ayant un volume utile de 100 m³. Le débit de la pompe 5 étant de 450 m³/h et celui du ventilateur 7 de 25 000 m³/h, la température de sortie de cuve 1 de la bouillie était de 70-72 °C, pour une température d'entrée de la bouillie dans la cuve 1 et une température de matière dans le réacteur principal 3 (compartiment de réaction) de 78-80 °C. L'augmentation de production obtenue était de 60 tonnes/jour, soit 20 % du nominal. Le rendement d'attaque était maintenu équivalent à celui du réacteur 3, de même que le titre en $P_2O_5$ de l'acide phosphorique produit.

Le brassage de la bouillie dans la cuve 1 et son retour dans le réacteur 3, à une température inférieure de 8 ± 2 °C à celle de la matière traitée dans ce réacteur 3 a permis de stabiliser la réaction et d'induire des germes de cristallisation qui ont sensiblement grossi.

Le rendement obtenu pour un phosphate à 60 % de B. P. L. était ainsi de 96 %, et le titre de l'acide produit était de 28 % de $P_2O_5$.

L'abréviation « B. P. L. » utilisée plus haut signifie « Bone Phosphate Lime », c'est-à-dire Teneur en Phosphate Tricalcique.

## Revendication

Dispositif à connecter avec un réacteur préexistant de production d'acide phosphorique par voie humide à partir de phosphates naturels et d'acide sulfurique, ledit dispositif comprenant un récipient séparé du réacteur et pouvant être fermé, dans lequel le mélange réactionnel est agité et refroidi, des moyens de liaison entre ce récipient et le réacteur pour soutirer le mélange réactionnel du réacteur et y ramener le mélange refroidi dans ce récipient et des moyens pour faire circuler de l'air de refroidissement dans ledit récipient, ledit dispositif étant caractérisé en ce que ledit récipient est une cuve fermée de volume inférieur à celui du réacteur, la somme du volume du réacteur et de la cuve en m³ par rapport à la production journalière effective d'acide phosphorique, exprimée en tonnes de $P_2O_5$ par jour, étant dans un rapport allant de 1,5 à 1,7, les moyens de liaison entre la cuve et le réacteur étant tels que les produits en réaction préalablement mélangés dans le réacteur sont introduits dans la cuve par débordement du réacteur ainsi que par une tuyauterie reliant le fond du réacteur à ladite cuve ce qui assure des niveaux de produit sensiblement égaux dans la cuve et le réacteur, et le mélange réactionnel circulant dans la cuve étant refroidi dans celle-ci de telle sorte qu'il soit réintroduit dans le réacteur à une température inférieure de 8 ± 2 °C à celle du mélange dans le réacteur.

## Claim

Device for connecting to an already known reactor for the production of phosphoric acid by the wet method from natural phosphates and sulphuric acid, said device comprising a vessel distinct from the reactor and capable of being closed, in which vessel the reaction mixture is stirred and cooled means of connection between this vessel and the reactor for withdrawing the reaction mixture from the reactor and introducing it into the mixture cooled in said vessel and means for causing cooling air to circulate in said vessel, said device being characterised in that said vessel is a closed tank of volume less than that of the reactor, the sum of the volumes of the reactor and of the tank in m³, relative to the effective daily production of phosphoric acid, expressed in tonnes of $P_2O_5$ per day, being in a ratio ranging from 1.5 to 1.7, the means of connection between the tank and the reactor being such that the reaction products which have before-hand been mixed in the reactor are introduced into the tank by overflow from the reactor as well as through a pipe which connects the bottom of the reactor to said tank, thereby resulting into substantially equals levels of product in the tank and the reactor, and the reaction mixture circulating in the tank being cooled in the latter in such a manner that it is reintroduced into the reactor at a temperature which is 8 ± 2 °C below temperature of the mixture in the reactor.

## Anspruch

Vorrichtung zum Anschluß an eine vorhandene Reaktionseinrichtung zur Herstellung von Phosphorsäure auf nassem Wege aus natürlichen Phosphaten und Schwefelsäure, bestehend aus einem von der Reaktionseinrichtung getrennten und verschließbaren Behälter, in dem die Reaktionsmischung in Bewegung versetzt und abgekühlt wird, aus Mitteln zur Verbindung des Behälters und der Reaktionseinrichtung, um die Reaktionsmischung aus der Reaktionseinrichtung abzulassen und dieser im Behälter abgekühlte Mischung wieder zuzuführen, und aus Mitteln, um Kühlluft im erwähnten Behälter umlaufen zu lassen, dadurch gekennzeichnet, daß der genannte Behälter eine geschlossene Wanne ist, deren Volumen kleiner ist als das der Reaktionseinrichtung, wobei die Summe des in m$^3$ gemessenen Volumens der Reaktionseinrichtung und der Wanne im Verhältnis zur effektiven Tagesproduktion an Phosphorsäure, ausgedrückt in Tonnen $P_2O_5$ pro Tag, in der Größenordnung von 1,5 bis 1,7 liegt, daß die Verbindungsmittel zwischen der Wanne und der Reaktionseinrichtung derart sind, daß die zuvor gemischten und in Reaktion befindlichen Produkte in der Reaktionseinrichtung durch überfließen und über eine Rohrleitung in die Wanne eingeleitet werden, welche Rohrleitung den Boden der Reaktionseinrichtung mit der erwähnten Wanne verbindet, wodurch gleiche Produktniveaus in der Wanne und in der Reaktionseinrichtung gewährleistet werden, und daß die in der Wanne umlaufende Reaktionsmischung in dieser so abgekühlt wird, daß sie wieder in die Reaktionseinrichtung mit einer Temperatur eingeführt wird, die um $8 \pm 2\,°C$ unter der Temperatur der in der Reaktionseinrichtung befindlichen Mischung liegt.

FIG.1

FIG.2